# EUROPÄISCHE PATENTSCHRIFT

(11) **EP 0 549 756 B1**
(45) Veröffentlichungstag und Bekanntmachung des Hinweises auf die Patenterteilung: **29.10.1997**
(21) Anmeldenummer: 92914227.1
(22) Anmeldetag: 03.07.1992
(51) Int. Cl.: B01D 47/04

(54) **VORRICHTUNG ZUR REINIGUNG VON GASEN, INSBESONDERE VON RAUCHGASEN**
GAS SCRUBBING DEVICE, IN PARTICULAR FOR FLUE GAS
DISPOSITIF DE LAVAGE DE GAZ, NOTAMMENT DE GAZ DE FUMEE

(30) Priorität: 04.07.1991 DE 9108270 U; 13.02.1992 DE 9201846 U
(43) Veröffentlichungstag der Anmeldung: 07.07.1993
(73) Patentinhaber: Berthold, Hermann, D-90768 Fürth (DE)
(72) Erfinder: Berthold, Hermann, D-90768 Fürth (DE)
(74) Vertreter: Vogeser, Werner, Dipl.-Ing.
(86) Internationale Anmeldenummer: EP9201509
(87) Internationale Veröffentlichungsnummer: WO9300980

(56) Entgegenhaltungen:
- DE-A- 3 025 671
- DE-A- 3 920 321
- US-A- 4 003 724

## Beschreibung

Die Erfindung betrifft ein Verfahren entsprechend dem Oberbegriff des Anspruchs 1.

Ein derartiges Verfahren kommt bei der aus der DE-3920321 bekannten Vorrichtung zur Anwendung. Bei dieser Vorrichtung setzt sich im Reaktionsraum in einem Reaktionsmittel-Sammelbehälter Schlamm ab, der in einen Schlammsammelbehälter geleitet wird, in dem er getrocknet wird. Der sich auf dem Reaktionsmittel absetzende Schaum wird mittels eines Schaumzerlegers in Flüssigkeit und gereinigtes Gas zerlegt. Die Flüssigkeit, die im wesentlichen aus dem Reaktionsmittel besteht, wird dem Reaktionsraum wieder zugeleitet.

Mit dieser Vorrichtung ist es zwar möglich, eine weitgehende Reinigung der zugeführten Gase zu erreichen, jedoch sind die darin enthaltenen Verunreinigungen in dem aus dem Reaktionsraum entnommenen Schlamm auch nach dessen Trocknung gemischt enthalten.

Der Erfindung liegt die Aufgabe zugrunde, eine Anlage zu schaffen, mittels deren sich die aus den zu reinigenden Gasen entfernten Stoffe separieren lassen.

Gelöst wird diese Aufgabe gemäß der Erfindung durch die im Anspruch 1 angegebenen Merkmale. Zweckmäßige Ausgestaltungen dieses Verfahrens ergeben sich aus den Unteransprüchen 2 bis 9.

Die Erfindung beruht u.a. auf der Erkenntnis, daß der sich im Reaktionsraum bildende Dichtschaum, der sich als Reaktionsmittelgemisch auf der Flüssigkeitsoberfläche im Schlammsammelbehälter ablagert, einen wesentlichen Teil der aus den Gasen zu entfernenden Stoffe enthält. Dies bedeutet, daß es zweckmäßig ist, zu versuchen, die im Schlamm enthaltenen Stoffen zu separieren. Hierzu wird in einem Zwischenlagerungsvorgang eine Schwerkrafttrennung durchgeführt. Dabei setzen sich die schweren Bestandteile ab und können einer Reststoffverwertung zugeführt werden. Die leichten Gasbestandteile werden dann einer Schichtbildung unterworfen. Hierzu kann u.a. ein weiteres Reaktionsmittel zugeführt werden. Beide Reaktionsmittel bewirken, daß sich die einzelnen Stoffe schichtweise trennen und/oder absetzen. Anschließend ist es möglich, in Abhängigkeit von dem spezifischen Gewicht der verschiedenen Stoffe diese abzuleiten und zu separieren sowie weiterzubehandeln.

Eine wesentliche Verbesserung des Wirkungsgrades läßt sich dadurch erreichen, daß flüssiges Reaktionsmittel und/oder Dichtschaum mittels einer Sprüheinrichtung in die dem Reaktionsraum zugeführten, zu reinigenden Gase eingeleitet wird. Vor allem bei Zufuhr von Gasen mit einer Temperatur von mehr als 60° C kann hier eine erhebliche Verbesserung des Wirkungsgrades erreicht werden.

Bei der zuvor erwähnten Zufuhr von Gasen mit einer höheren Temperatur ist es zweckmäßig, den im Reaktionsraum anfallenden Schlamm einem Trocknungsvorgang zu unterwerfen. Hierzu wird der Schlamm einem Etagentrockner zugeführt, in den die zu reinigenden Gase zentral eingeleitet und der Schlamm radial über die Etagen verteilt und nach unten gefördert werden. Auch hier ist es von Vorteil, dem Trockner-Reaktionsraum über den Rohgaseintritt Dichtschaum und sich ansammelnde Flüssigkeit zusammen mit dem Reaktionsmittel zuzuführen.

Bei einem Verfahren zur Reinigung von Gasen, insbesondere von Rauchgasen unter Verwendung eines schaumbildenden Reaktionsmittels, mit dem Rohgas in einem Reaktionsraum in Kontakt gebracht wird, bei dem der Schaum nach der Reaktion zwischen Rohgas und dem Reaktionsmittel zerlegt, das durch die Zerlegung wiedergewonnene Reaktionmittel und der sich absetzende Schlamm getrennt gesammelt werden, und das gereinigte Gas abgeleitet wird, wird vorgeschlagen, daß bei der Reinigung von Rohgas mit einer Temperatur von < 60° C die Schaumzerlegung im Reaktionsraum erfolgt, durch die Schaumzerlegung gebildeter Dichtschaum und mit Wasser und Gasen vermischtes Reaktionsmittel unterhalb des Dichtschaums gesammelt werden, der Dichtschaum und Oberflächenschlamm aus dem Reaktionsraum abgesaugt und zur Schwerkrafttrennung zwischengelagert werden, in einer Absetzphase eine Schichtbildung der abzuscheidenden Stoffe durchgeführt wird, und die einzelnen Schichten sukzessive Getrennt werden.

Einer der wesentlichen Vorteile dieses Verfahrens besteht darin, daß durch die Schaumbildung und anschließende Schaumzerlegung erreicht wird, daß die aus den Gasen zu entfernenden Stoffe und ein Teil der Gase selbst im sich ergebenden Dichtschaum und dem sich darunter ansammelnden Schlamm in Form einer Lösung (= ein Gemenge loser Stoffe), einer Emulsion (= die feinste Verteilung eines unlöslichen, nicht kristallinen Stoffes in einer Flüssigkeit), einer Dispersion (= die feinste Verteilung eines oder mehrerer Stoffe in einem anderen) und/oder einer Suspension (= die Aufschwemmung feinst verteilter fester Stoffe in einer Flüssigkeit vorliegen), was sich für das Separieren der Stoffe günstig auswirkt.

Diese Separierung kann auch dadurch begünstigt werden, daß das Reaktionsmittel in konzentrierter Form zur pH-Wertregulierung in das sich im Reaktionsraum ansammelnde Reaktionsmittel eingeleitet wird.

Wenn die Schicht des Reaktionsmittels, das bei der Schichtbildung wiedergewonnen wird, dem Reaktionsmittel im Reaktionsraum zugeführt wird, kann das Reaktionsmittel zurückgewonnen und wiederverwendet werden.

In bestimmten Fällen ist es zweckmäßig, daß während der Absetzphase, in der die Schichtbildung erfolgt, ein weiteres Reaktionsmittel zugeführt wird, um weitere Stoffe zu separieren.

Die durch die Schichtbildung gewonnenen Stoffe können einer Reststoffverwertung mit nachfolgendem Recycling-Prozeß oder nachfolgender Entsorgung zugeführt werden, da sie dem Reinigungsprozeß sukzessive entnommen werden können.

Wenn aus dem Reaktionsraum abgeleitetes Reaktionsmittel durch Versprühen dem in den Reaktionsraum eingeleiteten Rohgas zugeführt wird, wird bereits vor der Schaumbildung eine intensive Vermischung von Rohgas und Reaktionsmittel erreicht. Die Vermischung kann noch dadurch gefördert werden, daß Dichtschaum aus dem Reaktionsraum abgeleitet und dem in den Reaktionsraum eingeleiteten Rohgas zugeführt wird.

Bei Rauchgasen mit einer Temperatur > etwa 60° C und Trocknung des sich nach Reaktion mit dem Reaktionsmittel absetzenden Schlamms kann die Wärmeenergie des Rohgases dadurch ausgenutzt werden, daß der Schlamm in einem Trockner etagenweise vertikal von oben nach unten transportiert und gleichzeitig mit dem Trockner zugeführtem Rohgas in Kontakt gebracht wird, wenn man Dichtschaum aus dem dem Trockner zugeführten Rohgas zusetzt.

Wenn man im Trockner gebildetes Destillat und den im Trockner behandelten Schlamm getrennt ableitet, erreicht man bereits eine wesentliche Vorreinigung der Rohgase, bevor diese unter Schaumbildung mit dem Reaktionsmittel in Kontakt gebracht werden.

Es ist zweckmäßig, gleichzeitig mit dem Dichtschaum aus dem Reaktionsraum dem Trockner auch Schlamm zuzuführen, so daß zwischen Trockner und Reaktionsraum ein Flüssigkeitsaustausch stattfindet.

Bei den leichten Stoffen, die man durch die schichtweise Schwerkraftablagerung erhält, handelt es sich vor allem um Terpene, die zweckmäßigerweise dem Reinigungsprozeß wieder zugeführt werden. Diese Stoffe können entweder dem Trockner, oder dem Reaktionsraum oder nachgeschalteten Stufen zugeführt werden.

Im Schaumzerleger erfolgt eine mechanische Zerlegung des Schaums in nach oben austretendes gereinigtes Gas und sich aufgrund der Schwerkraft nach unten absetztende Flüssigkeit sowie Dichtschaum.

Die Anlage weist ein unteres Auffangblech unterhalb des Schaumzerlegers auf, das am Rande Durchtrittsöffnungen aufweist und das mit dem Gehäuse des Schaumzerlegers über Ableitrohre verbunden ist. Durch dieses untere Auffangblech wird eine Abtrennung des Reaktionsraums erreicht, so daß der sich auf der Flüssigkeit ansammelnde Dichtschaum vom Gebläse des Schaumzerlegers nicht wieder angesaugt wird.

Das untere Auffangblech ist nach oben gewölbt, um ein Ansammeln von Stoffen zu verhindern.

Die Anlage weist eine Trenneinrichtung zur schichtweisen Ableitung der mittels des Reaktionsmittels gebildeten Schichten, eine Meßeinrichtung zur Messung des spezifischen Gewichts der jeweils abgleiteten Schicht, und eine Spüleinrichtung, um nach Ableiten einer Schicht die Trenneinrichtung zu spülen, auf. Diese Einrichtung ist von besonderer Bedeutung, da aus ihr die aus den Gasen entfernten Stoffe getrennt entommen werden können.

Das Sauggebläse hat einen Rotor mit zur Drehrichtung tangentialen Rotorblättern. Diese Ausbildung bewirkt, daß auf der Rückseite der Rotorblätter ein Ansaugeffekt und auf der Vorderseite ein Beschleunigungseffekt auftritt, so daß der angesaugte Schaum in Richtung der Rotorblätter nach außen beschleunigt und nach oben angesaugt wird.

Die Rotorblätter sind von entgegen der Drehrichtung des Rotors gebogenen Leitblechen umgeben, auf die der Schaumaufprallt, so daß es zu einer intensiven Reibung und Abbremsung und damit mechanischen Zerlegung des Schaums in Reinigungsmittelflüssigkeit, Dichtschaum und Schlamm kommt.

Um zu verhindern, daß Teile des zerlegten Schaums nach oben mitgerissen werden, sind die Leitbleche durch sichelförmige Abdeckbleche abgedeckt.

Die Ableitrohre sind zweckmäßigerweise an den vom Rotor abgewandten Enden der Leitbleche angeordnet und sind in diesem Bereich halb aufgeschnitten, so daß sie den zerlegten Schaum aufnehmen und in den Sammelbehälter leiten.

Bei der Reinigung von Gasen mit einer Temperatur über 60° C verwendet man zweckmäßigerweise einen Etagentrockner mit einem zentralen Drehrohr mit einem darin angeordneten spiralförmigen Leitblech für das Rohgas, das über Austrittsöffnungen im Drehrohr auf die einzelnen Etagenbleche geleitet wird, und mit einem stationären Räumer, der den auf den Etagenblechen befindlichen Schlamm über Öffnungen in den Etagenblechen nach unten transportiert. Diese Art der Trocknung nutzt die Wärmeenergie des Rohgases aus. Gleichzeitig wird aber auch ein Vorreaktionsraum geschaffen.

Zweckmäßigerweise sind im Reaktionsraum im Bereich des Reaktionsmittels Abscheidelektroden zur Metall- und/oder Oxidabscheidung vorgesehen, die umschaltbar sind. Dadurch können durch elektrolytische Abscheidung zahlreiche Stoffe entfernt, aber auch durch Umschaltung der Elektroden für bestimmte Reaktionen wieder verwendet werden.

Die Anlage kann als eine mobile, auf einem Fahrzeug montierbare Station ausgebildet sein. Bei Vorhandensein eines Trockners kann dieser auf einem zusätzlichen ankuppelbaren Fahrzeug montierbar sein. Durch diese mobile Ausführung der Anlage können z. B. bei Fabrikationsanlagen zunächst Versuche durchgeführt werden, um die zu reinigenden Gase zu testen.

Die Erfindung wird nachstehend anhand der Fig. 1 bis 3 beispielsweise erläutert. Es zeigt:
Fig. 1 eine schematische Darstellung einer Anlage zur Durchführung des erfindungsgemäßen Verfahrens,
Fig. 2 einen Vertikalschnitt des Schaumzerlegers der Anlage der Fig. 1, und
Fig. 3 eine Aufsicht des Schaumzerlegers der Fig. 1.

Das Verfahren zur Reinigung von Gasen beruht auf der Technologie der chemisch-physikalischen Reinigung und nutzt das Zusammenwirken physikalischer, chemischer, aerodynamischer und strömungstechnischer Vorgänge. Die Anlage zur Anwendung dieses Verfahrens ist modular aufgebaut und ist in der Lage, Gase mit einer Temperatur unter oder über 60° C zu behandeln. Die Anlage kann als mobile Station ausgebildet sein, die auf einem Fahrzeug montierbar ist; dabei kann der Trockner auf einem ankuppelbaren gesonderten Fahrzeug montierbar sein.

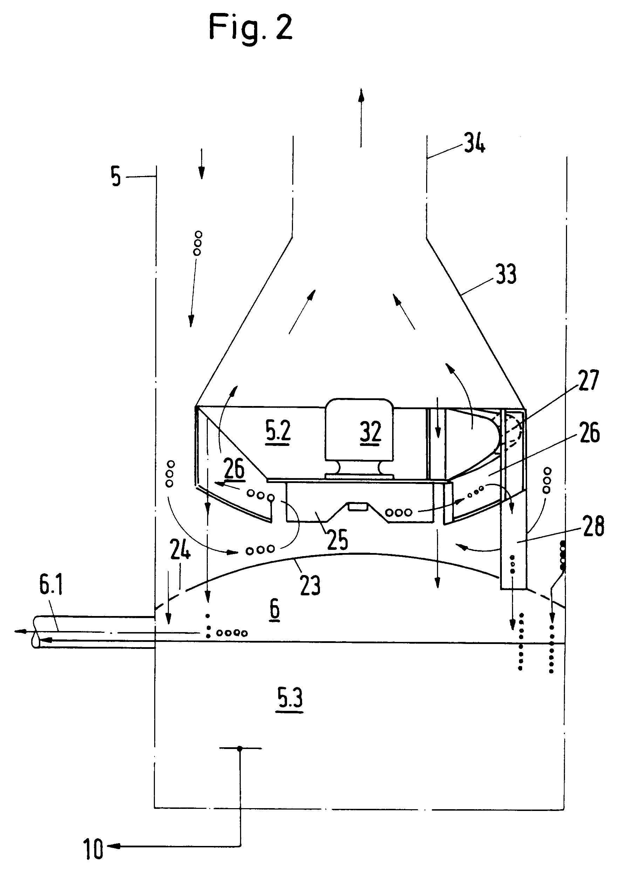

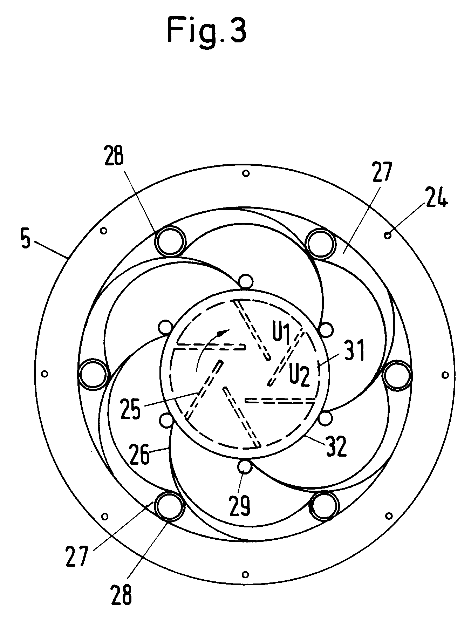

Rohgas mit einer Temperatur von weniger als 60° C wird der Anlage bei B zugeführt und gelangen über ein Sauggebläse 3 und eine Vorsprüheinrichtung 4 in das Kernstück der Vorrichtung, nämlich den Wäscher 5. In diesem wird das Gas über dynamische Walzen 5.1 zwangsgeführt und mit einem speziell auf das Gas abgestimmten Reaktionsmittel in Kontakt gebracht. Der durch diesen dynamischen Vorgang entstehende Reinigungsschaum stellt ein Reaktionsmedium hoher Oberfläche dar, über den die im Gas enthaltenen, abzuscheidenden Stoffe physikalisch und chemisch gebunden werden. Über einen im Austrittsbereich des Wäschers 5 angeordneten speziellen Schaumzerleger 5.2, der anhand der Figuren 2 und 3 näher erläutert wird, wird der Schaum wieder in flüssigen Zustand gebracht und kann in der ein geschlossenes System darstellenden Anlage als Reaktionsmittel rezirkulieren. Das gereinigte Gas tritt über ein Austrittsrohr bei C aus. Das für den Reinigungsprozeß notwendige Reaktionsmittel kann von einem Behälter 15 aus in konzentrierter Form zur pH-Wertregulierung gesteuert zugeführt werden.

Im Wäscher 5 erfolgt die Schaumbildung dadurch, daß die Walzen 5.1 in in einem oberen Auffangblech 22 befindliches Reaktionsmittel eintauchen, so daß es zwischen den zugeführten Gasen und dem Reaktionsmittel zu einer intensiven Vermischung und Verwirbelung und damit Schaumbildung kommt. Das beim Zerlegen des Schaums im Schaumzerleger 5.2 zurückgewonnene und mit Gasbestandteilen gebundenes Reaktionsmittel wird in einem Sammelbehälter 5.3 gesammelt. Der Sammelbehälter 5.3 ist über ein unteres Auffangblech 23 vom Reaktionsraum des Wäschers 5 getrennt, wie anhand der Fig. 2 und 3 näher erläutert wird.

Im Sammelbehälter 5.3 oder außerhalb davon des Wäschers 5 mit angeschlossenen Durchlaufbehältern, in dem sich die abzuscheidenden Stoffe als Lösung, Emulsion, Dispersion oder Suspension befinden, können Abscheidelektroden 21 vorgesehen sein, mittels derer in den zu reinigenden Gasen enthaltene Metalle und/oder Oxidverbindungen abgeschieden werden können.

Mittels einer Absaugvorrichtung 6 werden der Dichtschaum und Oberflächenschlamm über eine Leitung 6.3 in einen Vorratstank 7 zur Zwischenlagerung übergeleitet.

Stoffe, die in dem flüssigen Reaktionsmittel gelöst sind und ein höheres spezifisches Gewicht haben, als das zur Reinigung verwendete Reaktionsmittel, setzen sich in einem Tank 8 ab und können über eine Leitung 8.1 einer Reststoffverwertung 19 und nachfolgendem Recycling 20 gegebenenfalls der Entsorgung zugeführt werden.

Stoffe, die im Reaktionsmittel gebunden und leichter oder schwerer als diese sind, werden als Emulsion, Dispersion oder Suspension über eine Leitung 7.1 in einen Absetztank 9 übergeleitet, in dem eine Beruhigung erfolgt. Das mitgeführte Reaktionsmittel stabilisiert sich im Absetztank 9 und kann über eine Leitung 9.1 durch Einleiten in den Sammelbehälter 5.3 dem Reinigungsprozeß wieder zugeführt werden.

Zur Rückgewinnung von im Absetztank 9 enthaltenen Rohstoffen kann diesem aus einem Reaktionsmitteltank 9.1 ein weiteres Reaktionsmittel zugeführt werden.Beide Reaktionsmittel bewirken getrennt oder zusammen eine Schichtbildung der im Absetztank 9 enthaltenen Stoffe. Ein Absaugbehälter 9.5 ermittelt mittels einer entsprechenden Meßeinrichtung das spezifische Gewicht der jeweils zu entnehmenden Schicht 9.2, 9.3 und 9.4 und mehr im Abscheidtank 9 und leitet diese ab. Die so gewonnenen Stoffe werden dann über eine Leitung 14.5 der Reststoffverwertung 19 zugeführt werden. Nach jedem Absaugvorgang erfolgt ein Spülvorgang. Das dabei anfallende Reaktionsmittel kann mit noch enthaltenen Stoffen über eine Leitung 17.1 und die Leitung 15.1 oder über den Reinigungsmittel-Konzentrattank 15 dem Reinigungsprozeß wieder zugeführt oder aber auch über eine Leitung 16 abgeleitet werden.

Die bei der Trennung im Absaugbehälter 9.5 gewonnenen Rest-und Rohstoffe können entsprechenden Unternehmen zur Verarbeitung und/oder zur Kerstellung neuer Produkte zugeführt oder einem Recyclingprozeß unterworfen werden, wie bei 19 angedeutet ist. Es ist aber auch möglich, Stoffe, die aus wirtschaftlichen Gründen nicht mehr wiederverwertet werden können, über die Verbrennung der Reststoffenergierückgewinnung zugeführt werden, wie bei 20 angedeutet ist, oder als Sekundärprodukt verwendet werden.

Bei der Reinigung von Gasen mit einer Temperatur über 60° C ist zusätzlich ein Trocknungsvorgang wirtschaftlich. Hierzu wird die bisher beschriebene Anlage durch einen Trockner 1 ergänzt. Beim Trockner 1 handelt es sich um einen Etagentrockner, dessen Gehäuse die zu reinigenden Gase bei A oben zugeführt werden. Von dort gelangen sie über ein mit einem spiralförmigen Leitblech 35 und Durchbrüchen 38 versehenes Drehrohr 2 und Öffnungen in diesem auf Etagenbleche 36, die mit einem stationärem Räumer 37 zusammenwirken, der auf den Etagenblechen befindlichen Schlamm über Öffnungen in diesen nach unten transportiert. Der auf den Etagenblechen befindliche Schlamm gelangt vom Sammelbehälter 5.3 im Wäscher 5 über eine Leitung 10 in den Trockner 1. Der getrocknete Schlamm, der unter Ausnutzung der im zugeführten Gas enthaltenen Wärme konzentriert und/oder getrocknet wird, kann über eine Leitung 10.1 in einem Behälter 11 gesammelt und über eine Leitung 11.1 einem Verfeuerungsprozeß oder eine Leitung 11.2 der Reststoffverwertung 19 zugeführt werden. Das sich an der Innenseite des Gehäuses des Trockners 1 ansammelnde Destillat wird über eine Leitung 2.1 einem Behälter 12 zugeführt, in dem sich durch Schwerkraftablagerung Stoffe wie Metalloxyde unter anderem ansammeln, die in einem Reststoffsammeltank 13 aufgefangen und über eine Leitung 13.1 der Reststoffverwertung oder, wie durch die Leitungen 14.3, 14.4 und 17 angegeben ist, Reaktionsstoffe dem Reinigungsprozeß wieder zugeführt werden können. Die Absaugvorrichtung 6 des Wäschers 5, die dem Vorratstank 7 Dichtschaum zuführt, ist auch über eine Leitung 6.1 mit dem Trockner 1 verbunden, so daß sich in diesem in einem Sammelbehalter 2.2 flüssiges Reaktionsmittel ansammelt, das gleichzeitig über eine Leitung 6.2 auch den zu reinigenden Gasen A zugeführt wird. Aufgrund der verschiedenen Überlauf- und Rückleitungen, die den Wäscher 5 und den Trockner 1 verbinden, wird in beiden stets ein bestimmtes Flüssigkeitsniveau aufrechterhalten.

Die im Behälter 12 anfallenden leicheteren Stoffe, wie z. B. Terpene sowie Reaktionsmittel werden über eine Leitung 12.1 einem Kondensattank 14 zugeführt. Das mitgeführte Kondensatwasser wird über eine Ausgleichsleitung 14.2 in den Trockner 1 geleitet. Die leichteren Stoffe werden über eine Leitung 14.1 und die Leitungen 14.3 14.3 a) und 4.1, 14.4 und 17 dem Reinigungsprozeß wieder zugeführt oder gelangen zur Reststoffverwertung 19. Außerdem kann im Sammelbehälter 2.2 des Trockners 1 anfallende Wärme über eine Leitung 18 abgeleitet werden. Über eine Leitung 18.1 aus dem Trockner 1 werden Stoffe von der Flüssigkeitsoberfläche zugeleitet. Über eine Leitung 18.2 kann der sich im Sammelbehälter ansammelnde Schlamm über eine Leitung 10 der Trocknung zugeführt werden.

Wie Fig. 2 zeigt, besteht der Schaumzerleger 5.2 aus einem im Wäscher 5 angeordneten Gehäuse 33, das sich nach oben und unten verjüngt. Zentral in diesem Gehäuse befindet sich ein Sauggebläse mit einem Rotor 31 mit tangential zur Drehrichtung des Rotors verlaufenden Rotorblechen 25, die außen von entgegen der Drehrichtung des Rotors gebogenen stationären Leitblechen 26 umgeben sind. Unterhalb des Schaumzerleger 5.2 befindet sich ein unteres Auffangblech 23, das am Rande mit Öffnungen 24 versehen ist und dessen Unterseite über Ableitrohre 28 mit dem Gehäuse 33 des Schaumzerlegers verbunden ist. Die Ableitrohre 28 sind an den Enden der Leitbleche 26 angeordnet, die vom Rotor des Motors 32 des Schaumzerlegers abgewandt sind. Im Bereich dieser Leitbleche 26 sind die Ableitrohre 28 halb aufgeschnitten. Die Leitbleche 26 sind oben durch sichelförmige Abdeckbleche 27 abgedeckt, wie insbesondere Fig. 3 zeigt.

Durch die dynamischen Walzen 5.1 qebildeter Schaum gelangt längs der Außenseite des Schaumzerleqergehäuses nach unten, wie durch Pfeile angegeben ist. Der Schaum wird durch das Sauggebläse in das Innere des Schaumzerlegergehäuses 33 gesaugt und radial nach außen beschleunigt. Das gereinigte Gas tritt nach oben aus, während das Reaktionsmittel zusammen mit Schlamm und Dichtschaum über die vertikalen Rohre durch das untere Auffangblech 23 in die darunter befindliche Absaugvorrichtung 6 bzw. den Sammelbehälter 5.3 geleitet wird. Bereits vor Eintritt in das Schaumzerlegergehäuse kann sich Reaktionsmittel zusammen mit Schlamm ansammeln, das über die Öffnungen 24 im Auffangblech 23 in den Sammelbehälter 5.3 gelangt.

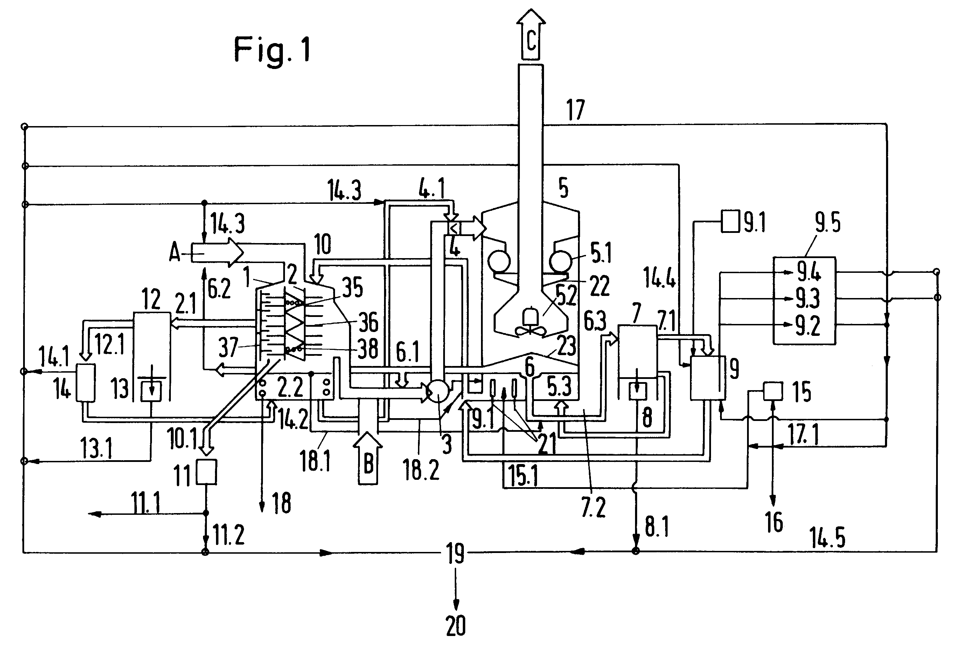

Über die Leitung 6.1 können der Dichtschaum und das Reaktionsmittel von der Flüssigkeitsoberfläche im Sammelbehälter 5.3 den zu reinigenden Gasen und/oder dem Trockner 1 zugeführt werden, wie anhand der Fig. 1 beschrieben wurde.

Da die Rotorblätter tangential angeordnet sind, wird über ihre Rückseite U1 angesaugt und über deren Vorderseite U2 beschleunigt, so daß der zu zerlegende Schaum zu den Leitblechen 26 transportiert wird. Durch diese Vorgänge erfolgt eine mechanische Zerlegung des Schaums in Flüssigkeit, Dichtschaum und gereinigte Gase. Insbesondere die Flüssigkeiten werden über die Ableitrohre 28 nach unten in den Sammelbehälter 5.3 geleitet.

## Patentansprüche

1. Vorrichtung zur Reinigung von Gasen, insbesondere von Rauchgasen, unter Verwendung eines schaumbildenden Reaktionsmittels, mit einem Reaktionsraum, in dem die Gase mittels drehbarer Walzen (5.1) mit dem Reaktionsmittel in Kontakt gebracht werden, einem Schaumzerleger (5.2), mittels dem der Schaum nach der Reaktion zwischen den Gasen und dem Reaktionsmittel zerlegt wird, und einem Sammelbehälter (9.5), in dem der sich durch die Reinigung bildende Schlamm gesammelt wird,
**gekennzeichnet durch**
ein oberes Auffangblech (22) unterhalb der Walzen (5.1), auf die das Reaktionsmittel geleitet wird und in das die Walzen eintauchen und einen Schaumzerleger (5.2), der unterhalb des oberen Auffangblechs (22) angeordnet ist, der ein sich nach oben und unten verjüngendes Gehäuse (33) aufweist, an das sich nach oben ein das obere Auffangblech (22) durchsetzender Austrittskanal (34) für die gereinigten Gase anschließt und der ein Sauggebläse, mittels dem der Schaum angesaugt wird und zerlegt wird, enthält,
ein unteres Auffangblech (23) unterhalb des Schaumzerlegers (5.2), das am Rande Durchtrittsöffnungen (24) aufweist, das mit dem Gehäuse (33) des Schaumzerlegers (5.2) über Ableitrohre (28) verbunden ist, und das nach oben gewölbt ist,
einen im Sauggebläse des Schaumzerlegers (5.2) vorgesehenen Rotor (31) mit zur Drehrichtung tangentialen Rotorblättern (25),
die von entgegen der Drehrichtung des Rotors (31) gebogenen Leitblechen (26) umgeben sind, die durch sichelförmige Abdeckbleche (27) abgedeckt sind,
einen Vorratstank (7), in dem während einer Zwischenlagerung des zerlegten Schaums eine Schwerkrafttrennung der Stoffe, die ein höheres spezifisches Gewidit als das zur Reinigung verwendere Reaktionsmittel haben, durchführbar ist, und
einen Absetztank (9) in Verbindung mit einem Absaugbehälter (9.5), mittels dessen eine sukzessive Trennung der einzelnen Schichten (9.2 - 9.4) der übrigen Stoffe durchgeführt werden kann.

2. Vorrichtung nach Anspruch 1,
**dadurch gekennzeichnet, daß**
der Absaugbehälter (9.5) zur schichtweisen Ableitung der mittels des Reaktionsmittels gebildeten Schichten eine Meßeinrichtung zur Messung des spezifischen Gewichts der jeweils abgeleiteten Schicht, und eine Spüleinrichtung aufweist, um nach Ableiten einer Schicht die Trenneinrichtung zu spülen.

3. Anlage nach Anspruch 1 oder 2,
**dadurch gekennzeichnet, daß**
Ableitrohre (28) an den vom Rotor (31) abgewandten Enden der Leitbleche (26) angeordnet sind.

4. Vorrichtung nach Anspruch 3,
**dadurch gekennzeichnet, daß**
die Ableitrohre (28) im Bereich der Leitbleche (26) zu diesen halb aufgeschnitten sind.

5. Vorrichtung nach einem der Ansprüche 1 - 4,
**gekennzeichnet durch**
einen Etagentrockner (1) mit einem zentralen Drehrohr (2) mit einem darin angeordneten spiralförmigen Leitblech (35) für das Rohgas, das über Austrittsöffnungen (38) im Drehrohr (2) auf die einzelnen Etagenbleche (35) geleitet wird, und mit einem stationären Räumer (37), der den auf den Etagenblechen (35) befindlichen Schlamm über Öffnungen in den Etagenblechen nach unten transportiert.

6. Vorrichtung nach einem der Ansprüche 1 - 5,
**gekennzeichnet durch**
im Reaktionsraum im Bereich des Reaktionsmittels angeordnete Abscheidelektroden (21) zur Metall- und/oder Oxidabscheidung.

7. Vorrichtung nach Anspruch 6,
**dadurch gekennzeichnet, daß**
die Abscheidelektroden (21) umschaltbar sind.

8. Vorrichtung nach einem der Ansprüche 1 - 7,
**dadurch gekennzeichnet, daß**
die Anlage als mobile, auf einem Fahrzeug montierbare Station ausgebildet ist, so daß bei einer Fabrikanlage zunächst Versuche durchgeführt werden können.

9. Vorrichtung nach einem der Ansprüche 5-8,
**dadurch gekennzeichnet, daß**
der Trockner mit den zugehörigen Aggregaten auf einem gesonderten ankuppelbaren Fahrzeug montierbar ist, so daß dieses Fahrzeug nur im Bedarfsfall mitgeführt werden muß.

## Claims

1. Apparatus for scrubbing gases, in particular flue gases, using a foam-forming reagent, comprising a reaction space in which the gases are brought into contact with the reagent by Bans of rotatable rollers (5.1), a foam breakdown means (5.2), by means of which the foam is broken down after the reaction between the gases and the reagent, and a collecting container (9.5) in which the foam which is formed by the scrubbing operation is collected, characterised by
an upper catch plate (22) beneath the rollers (5.1) on to which the reagent is passed, the rollers dipping into the reagent, and a foam breakdown means (5.2) which is arranged beneath the upper catch plate (22), which has an upwardly and downwardly tapering housing (33) which is adjoined upwardly by an outlet passage (34) for the scrubbed gases which passes through the upper catch plate (22), and which includes a suction fan by means of which the foam is sucked in and broken down,
a lower catch plate (23) beneath the foam breakdown means (5.2), which at the edge has through openings (24), which is connected to the housing (33) of the foam breakdown means (5.2) by way of drain pipes (28), and which is curved upwardly,
a rotor (31) provided in the suction fan of the foam breakdown means (5.2), with rotor blades (25) which are tangential relative to the direction of rotation,
which are surrounded by guide plates (26) curved in opposite relationship to the direction of rotation of the rotor (31), which are covered by sickle-shaped cover plates (27),
a supply tank (7) in which during intermediate storage of the broken-down foam gravitational separation of the substances which are of a higher specific weight than the reagent used for the scrubbing operation can be effected, and
a settling tank (9) in conjunction with a suction removal container (9.5), by means of which successive separation of the individual layers (9.2 - 9.4) of the other substances can be effected.

2. Apparatus according to claim 1 characterised in that the suction removal container (9.5) for layer-wise discharge of the layers formed by means of the reagent has a measuring device for measuring the specific weight of the respective layer discharged, and a flushing device in order to flush the separating device after discharge of a layer.

3. Apparatus according to claim 1 or claim 2 characterised in that drain pipes (28) are arranged at the ends of the guide plates (26), which are remote from the rotor (31).

4. Apparatus according to claim 3 characterised in that in the region of the guide plates (26) the drain pipes (28) are half cut open to same.

5. Apparatus according to one of claims 1 to 4 characterised by a stage drier (1) with a central rotary tube (2) with a spiral-shaped guide plate (35) arranged therein for the crude gas which is passed by way of outlet openings (38) in the rotary tube (2) on to the individual stage plates (35), and with a stationary clearing device (37) which transports the sludge on the stage plates (35) downwardly by way of openings in the stage plates.

6. Apparatus according to one of claims 1 to 5 characterised by separation electrodes (21) arranged in the reaction space in the region of the reagent for metal and/or aide separation.

7. Apparatus according to claim 6 characterised in that the separation electrodes (21) can be switched over.

8. Apparatus according to one of claims 1 to 7 characterised in that the installation is in the form of a mobile station which can be mounted on a vehicle so that in the case of a manufacturing installation tests can firstly be carried out.

9. Apparatus according to one of claims 5 to 8 characterised in that the drier with the associated units can be mounted on a separate coupleable vehicle so that said vehicle only has to be brought along when necessary.

## Revendications

1. Dispositif pour l'épuration de gaz, en particulier de gaz de fumées, avec utilisation d'un réactif générateur de mousse, d'un espace de réaction dans lequel les gaz sont amenés en contact avec le réactif à l'aide de cylindres (5.1) rotatifs, d'un système destructeur de mousse (5.2) à l'aide duquel la mousse est détruite après réaction entre les gaz et le réactif, et d'un collecteur (9.5) dans lequel est collectée la boue formée par l'épuration,
caractérisé par
- une tôle de réception (22) supérieure qui est disposée en dessous des cylindres (5.1) sur lesquels est amené le réactif dans lequel plongent les cylindres, et un système destructeur de mousse (5.2) disposé en dessous la tôle de réception (22) supérieure et présentant une enveloppe (33) qui converge vers le haut et vers le bas, à laquelle se raccorde vers le haut un canal de sortie (34) pour les gaz épurés, traversant la tôle de réception (22) supérieure, et qui contient une soufflante aspirante à l'aide de laquelle la mousse est aspirée et détruite,
- une tôle de réception (23) inférieure qui est disposée en dessous du système destructeur de mousse (5.2), qui présente sur le bord des ouvertures de passage (24), qui est reliée à l'enveloppe (33) du système destructeur de mousse (5.2) par des tubes d'évacuation (28) et qui est bombée vers le haut,
- un rotor (31) disposé dans la soufflante aspirante du système destructeur de mousse (5.2) et comportant des pales de rotor (25) tangentielles par rapport à la direction de rotation, ces pales étant entourées par des tôles de guidage (26) incurvées à l'encontre du sens de rotation du rotor (31) et recouvertes par des tôles de recouvrement (27) en forme de faucille,
- une cuve de stockage (7) dans laquelle peut être opérée, pendant un stockage intermédiaire de la mousse détruite, une séparation par gravité des matières qui présentent un poids spécifique plus élevé que le réactif utilisé pour l'épuration, et
- une cuve de décantation (9) en communication avec un réservoir d'aspiration (9.5) à l'aide duquel peut être effectué une séparation successive des différentes couches (9.2 - 9.4) des matières restantes.

2. Dispositif suivant la revendication 12, caractérisé par le fait que le réservoir d'aspiration (9.5) présente, en vue de l'évacuation couche par couche des différentes couches formées à l'aide du réactif, un dispositif de mesure pour mesurer le poids spécifique de chaque couche évacuée, et un dispositif de rinçage pour rincer le dispositif de séparation après l'évacuation d'une couche.

3. Dispositif suivant la revendication 1 ou 2, caractérisé par le fait que des tubes d'évacuation (28) sont disposés aux extrémités des tôles de guidage (26) éloignées du rotor (31).

4. Dispositif suivant la revendication 3, caractérisé par le fait que les tubes d'évacuation (28) sont à moitié ouverts en direction des tôles de guidage (26) dans la zone de ces dernières.

5. Dispositif suivant l'une des revendications 1 à 4, caractérisé par le fait qu'il comprend un sécheur à étages (1) avec un tube rotatif (2) central et une tôle de guidage (35) en spirale, disposés dans ledit tube pour le gaz brut qui est amené par des ouvertures de sortie (38) dans le tube rotatif (2) sur les différentes tôles d'étages (35), et un racleur stationnaire (37) qui fait passer vers le bas, par des trous dans les tôles d'étages, la mousse se trouvant sur les tôles d'étages (35).

6. Dispositif suivant l'une des revendications 1 à 5, caractérisé par le fait que des électrodes de séparation (21) pour la séparation de métaux et/ou d'oxyde sont disposées dans l'espace de réaction, dans la zone du réactif.

7. Dispositif suivant la revendication 6, caractérisé par le fait que les électrodes de séparation (21) sont commutables.

8. Dispositif suivant les revendications 1 à 7, caractérisé par le fait que le dispositif est réalisé sous forme de station mobile susceptible d'être montée sur un véhicule, permettant ainsi d'effectuer des essais préalablement à une installation fixe.

9. Dispositif suivant l'une des revendications 5 à 8, caractérisé par le fait que le sécheur peut être monté avec les composants qui en font partie sur un véhicule particulier, susceptible d'être attelé, de sorte que ce véhicule ne doit être remorqué qu'en cas de besoin.
